Europäisches Patentamt

(19) European Patent Office

Office européen des brevets

(11) Publication number: **0 453 250 A1**

(12) **EUROPEAN PATENT APPLICATION**

(21) Application number: 91303403.9

(22) Date of filing: 17.04.91

(51) Int. Cl.⁵: **A61C 7/28**

(30) Priority: 18.04.90 US 510644

(43) Date of publication of application:
23.10.91 Bulletin 91/43

(84) Designated Contracting States:
AT BE CH DE DK ES FR GB IT LI LU NL SE

(71) Applicant: JOHNSON & JOHNSON
CONSUMER PRODUCTS, INC.
501 George Street
New Brunswick, New Jersey 08901 (US)

(72) Inventor: Bauer, William J.
10282 Rue St. Jacques
San Diego, CA 92131 (US)

(74) Representative: Fisher, Adrian John et al
CARPMAELS & RANSFORD 43 Bloomsbury
Square
London WC1A 2RA (GB)

(54) Sliding cap for placement in archwire slot of orthodontic bracket.

(57) A dental bracket (10) is disclosed which has a removable archwire cap (70). This cap (70) allows archwire (20) to be tensioned while the bracket is in place on the tooth. This cap also eliminates the necessity of prying dental bracket caps from the dental bracket while the cap is placed on the tooth.

FIG-1

## Field of the Invention

This invention relates generally to orthodontic brackets. Specifically, this invention relates to a device and methods for maintaining archwire within the archwire slots of orthodontic brackets.

## Background of the Invention

Orthodontic brackets have been used for quite some time in order to improve alignment of teeth. Orthodontic brackets are used in such a manner as to encourage the teeth to be disposed within the mouth in a particular parallel direction. One of the ways in which orthodontic brackets accomplish this is to have placed on the brackets a length of archwire so that the archwire creates a tension on the brackets adhered to the teeth. Naturally, with such tension created on the archwire, the teeth are encouraged to move in to certain desired positions.

In use of archwire, it is quite common for the archwire to lose its tensile force or for the necessary force extended on archwire to be changed. Thus, in many instances it will be desirable to remove and/or replace the archwire after the dental brackets have been placed on the teeth.

One of the preferred forms of dental brackets discloses a cap where the cap is welded over the archwire slot. Thus, the archwire must be threaded through the slot created by the walls of the tie wings of the dental bracket, the base of the bracket and the cap. Typically, in order to remove a dental bracket, the orthodontist must use a cap removal tool which pries the cap off the orthodontic bracket, much as one would use a can opener.

Naturally, the concept of prying open a cap for replacement of archwire is quite onerous for the user. Different forces must be applied to the dental bracket and the brackets themselves can be difficult to manipulate while in the mouth. Also, brazing or welding the caps to the brackets is uneven, and results in a generally awkward removal process, at the very least. Naturally, replacing the cap is virtually impossible, as these caps are extremely small and placement on the dental bracket requires much dexterity.

## Summary of the Invention

It is an object of the invention to provide an easy means for removal of archwire while retaining the archwire within a dental bracket slot at other times.

It is another object of the invention to provide for a means in which a cap may be removed from the dental bracket and replaced on the dental bracket without difficulty.

It is yet another object of the invention to provide a dental bracket which is able to have a variable tension placed on it by removal of the cap, and changing of the tension on the archwire while the dental brackets are placed on the teeth.

These and other objects of the invention are accomplished in a sliding cap for placement in the archwire slot of orthodontic bracket. The cap itself is spring-loaded so that the archwire fits within the archwire slot and the spring-loaded cap fits over the archwire slot. The cap remains in place during its time on the dental bracket while in the mouth. It is also able to be disposed so that removal and adjustment of the archwire is possible at all times.

These and other objects of the invention will be more readily discerned from the accompanying Detailed Description of the Drawings in connection with the Detailed Description of the Invention.

## Detailed Description of the Drawings

Fig. 1 shows a assembly view of a dental bracket with a removable sliding cap for archwire;

Fig. 2 shows a front view of the archwire slot with cap placed over it;

Fig. 3 shows a dental bracket with the cap of this invention half way disposed within the cap slot in the archwire slot; and

Fig. 4 shows a side view of the dental bracket archwire and archwire cap in place on the dental bracket.

## Detailed Description of the Invention

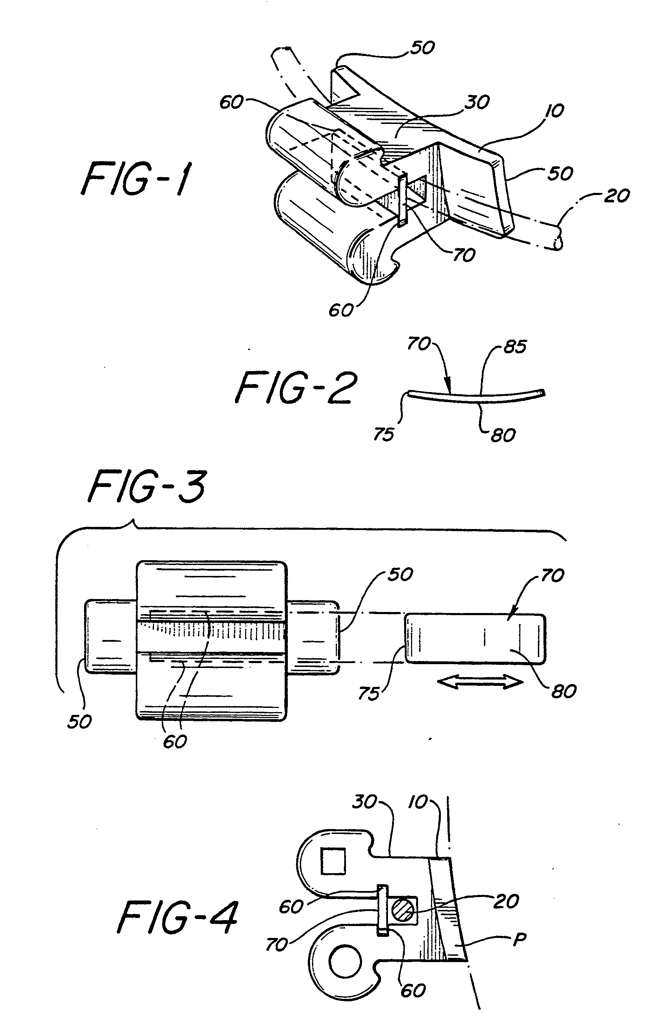

As can be seen in Figures 1, 2, 3 and 4, the present invention discloses a dental bracket 10 having an archwire slot 20 surrounded by two tie wings 30. The archwire slot has emplaced into it archwire 50 which is used to tension teeth. The dental brackets 10 are placed one per tooth and the archwire 50 is strung through the dental brackets 10 in order to tighten the dental brackets 10 in order to encourage the teeth to grow or relocate in a certain desired position.

Further, as can be seen in Figures 1, 2, 3 and 4, the invention discloses a groove or slot 60, formed within the archwire slot 20, and perpendicular to archwire slot 20. The groove 60 is usually formed by an electrical discharge machining (EDM) process. Thus, the slot 60 is formed parallel to the surface of the tooth and parallel to the plane P on which the dental bracket is placed on the tooth.

Within this slot 60 is placed cap 70. This cap 70 has a pair of sides 75 and a upper surface 80 and lower surface 85. The cap is generally bowed so that the lower surface is concaved within the upper surface 80. The cap 70 fits within the slot 60 in a press fit. Thus, the cap 70 when inserted into slot 60 fits snugly within slot 60. This relationship between cap 70, slot 60 and slot 60 on dental bracket 10, affords the user the capabilities of removing and reloading cap 70 while bracket 10 is attached to the tooth. This allows the user to remove or replace archwire as well as retension archwire while the bracket is attached to the tooth. The spring loaded cap 70 is capable of being engaged simply with a plier or similar instrument to slide it out of the mesial end of the bracket at one side 75, so that the former prying mechanisms are not required. This eliminates many of the inconsistent cap removal forces required due to variations in welding and brazing cap assemblies. Also, the cap 70 continues to allow the capabilities of threading the needle through the archwire slot should the user desire to not remove the cap during emplacement of archwire.

It is felt that the present invention can be better understood by the attached claims and their equivalents.

## Claims

1. In a dental bracket having a pair of tie wings around an archwire slot with a pair of walls, a groove channelled into said walls perpendicular to said archwire slot.

2. In the dental bracket of Claim 1, a cap insertable into said groove.

3. In the dental bracket of Claim 2, said cap spring-loaded within said groove.

4. In the dental bracket of Claim 3, said cap placed over archwire inserted within said archwire slot.

*FIG-1*

50

60

30

10

50

20

70

60

*FIG-2*

70

85

75

80

*FIG-3*

50

70

50

60

75

80

50

*FIG-4*

30

10

60

70

20

60

P

EP 0 453 250 A1

**European Patent Office**

## EUROPEAN SEARCH REPORT

Application Number

| | DOCUMENTS CONSIDERED TO BE RELEVANT | | EP 91303403.9 |
|---|---|---|---|

| Category | Citation of document with indication, where appropriate, of relevant passages | Relevant to claim | CLASSIFICATION OF THE APPLICATION (Int. Cl.5) |
|---|---|---|---|
| A | US - A - 4 260 375 (WALLSHEIM) <br> * Claim 1; fig. 3 * | 1 | A 61 C 7/28 |
| A | US - A - 4 355 975 (FUJITA) <br> * Claim 1; fig. 1,2 * | 1 | |
| A | US - A - 4 551 094 (KESLING) <br> * Claim 1; fig. * | 1 | |
| A | WO - A - 82/03 979 (PLETCHER) <br> * Abstract * | 1 | |
| | | | TECHNICAL FIELDS SEARCHED (Int. Cl.5) <br><br> A 61 C |

The present search report has been drawn up for all claims

| Place of search | Date of completion of the search | Examiner |
|---|---|---|
| VIENNA | 10-07-1991 | MARCHART |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

5